# EUROPÄISCHE PATENTSCHRIFT

(11) **EP 1 847 701 B1**
(45) Veröffentlichungstag und Bekanntmachung des Hinweises auf die Patenterteilung: **25.05.2011**
(21) Anmeldenummer: 07005518.1
(22) Anmeldetag: 17.03.2007
(51) Int. Cl.: F02D 9/10, F02M 35/10, F02M 35/116, F02B 27/02

(54) **Sauganlage für eine Brennkraftmaschine**
Intake manifold for an internal combustion engine
Dispositif d'admission d'air pour moteur à combustion interne

(30) Priorität: 20.04.2006 DE 102006018270
(43) Veröffentlichungstag der Anmeldung: 24.10.2007
(73) Patentinhaber: Dr. Ing. h.c. F. Porsche AG, 70435 Stuttgart (DE)
(72) Erfinder: Semmler, Daniel, 70563 Stuttgart (DE); Talan, Georg, 73660 Urbach (DE)

(56) Entgegenhaltungen:
- EP-A- 0 352 820
- EP-A- 1 508 678
- EP-A- 1 607 615
- DE-A1- 4 014 291
- DE-A1- 19 523 107
- JP-A- 10 212 960
- JP-A- 2001 317 364
- US-A- 5 186 126

## Beschreibung

Die Erfindung betrifft eine Sauganlage für eine Brennkraftmaschine mit mindestens zwei Zylinderbankreihen, wobei die Sauganlage zumindest ein zweiflutiges Saugrohr aufweist, dergestalt, dass im Saugrohr ein Trennelement integriert ist, das den Innenraum des Saugrohrs in zwei, im Wesentlichen im Querschnitt gleich ausgebildete Teilkanäle unterteilt, und wobei am Saugrohr eine Drosselklappenanordnung angeschlossen ist, wobei die Drosselklappenanordnung zumindest eine über eine Welle schwenkbar gelagerte Drosselklappe zur Regulierung der das Saugrohr durchströmenden Luftmenge aufweist.

Aus der DE 10 204 29 746 A1 ist eine Sauganlage für eine Brennkraftmaschine mit mindestens zwei Zylinderbankreihen bekannt, denen jeweils ein Ansaugkrümmer mit zu den Zylindern führenden Einzelrohren zugeordnet ist, wobei die Ansaugkrümmer über mit Schaltklappen versehene Querkanäle miteinander verbunden sind, sowie mit einer zu einem der Querkanäle führenden Luftzuführleitung, in der eine Drosselklappe zur Regelung der Luftmenge angeordnet ist. Die Luftzuführleitung besteht dabei aus einem zu einem Querkanal führenden zweiflutigen Verteilerrohr, an das stromaufwärts ein Drosselklappengehäuse angeschlossen ist, wobei im Verteilerrohr eine Innenwand integriert ist, die den Innenraum des Verteilerrohrs in zwei, im Wesentlichen im Querschnitt gleich ausgebildete Teilkanäle unterteilt.

Nachteilig an dieser aus dem Stand der Technik bekannten Sauganlage ist jedoch, dass eine Trennung der Resonanzvolumina nur bis zum Bereich der Drosselklappe möglich ist.

Aus der JP 2001 317 364 ist eine Sauganlage mit einer Trennwand im Saugrohr bekannt geworden, bei welcher sich die Trennwand über die Drosselklappe hinaus erstreckt.

Ausgehend vom Stand der Technik ist es Aufgabe der vorliegenden Erfindung, eine Sauganlage zu schaffen, die die aus dem Stand der Technik bekannten Nachteile umgeht, einfach herzustellen ist und eine hohe Betriebssicherheit gewährleistet.

Diese Aufgabe wird erfindungsgemäß mit den Merkmalen des Patentanspruchs 1 gelöst. Vorteilhafte Weiterbildungen der Erfindung sind Bestandteil der Unteransprüche.

Es wird dazu vorgeschlagen, dass im Bereich der Drosselklappenanordnung ein Trennkörper vorgesehen ist, wobei der Trennkörper form- und funktionskomplementär zu dem im Saugrohr angeordneten Trennelement ausgebildet ist, und wobei mittels des im Bereich der Drosselklappenanordnung angeordneten Trennkörpers die im Verlauf des Saugrohrs gebildeten Teilkanäle zumindest bis zur Drosselklappe und/oder der Drosselklappenanordnung, oder darüber hinaus, verlängert werden können. Mit anderen Worten werden die Teilkanäle des Saugrohrs bis hin zur Drosselklappenanordnung oder gegebenenfalls darüber hinaus verlängert. Es wird somit gewährleistet, dass die im Saugrohr bereichsweise vollzogene Trennung der Resonanzvolumina, auch bei teilweiser oder vollständig geöffneter Drosselklappe, im Bereich der Drosselklappenanordnung selbst, oder darüber hinaus, zuverlässig fortgeführt werden kann und somit eine noch bessere Versorgung der Zylinder mit Verbrennungsluft gewährleistet wird. Im Bereich der Drosselklappenanordnung bedeutet dies , dass sich die Teilkanäle bis zur Drosselklappe selbst, die Drosselklappenanordnung durchlaufend und gegebenenfalls über die Drosselklappenanordnung hinaus, erstrecken. Damit kann auch die Drosselklappenanordnung im getrennten Bereich des Saugrohres beliebig platziert werden.

Die Trennung des Verbrennungsluftgemischs kann also nicht nur bereichsweise in einem Bereich vor der Drosselklappe realisiert werden, sondern auch im weiteren Verlauf der Drosselklappe bzw. der Drosselklappenanordnung. Der Trennkörper, der form- und funktionskomplementär zu dem im Saugrohr angeordneten Trennelement ausgebildet ist, kann so im Drosselklappengehäuse angeordnet bzw. ausgebildet sein, dass sich ein nahezu bündiger bzw. fluchtender Kontaktbereich zu dem Trennelement des zweiflutigen Saugrohrs ergibt. Bevorzugt ist der Trennkörper so ausgebildet, dass sich im Verlauf der Drosselklappenanordnung im Wesentlichen die gleichen Teilkanäle bilden wie im Saugrohr selbst. Die genaue Ausgestaltung des zweiflutigen Saugrohrs spielt jedoch keine Rolle, solange gewährleistet wird, dass sich die Teilkanäle des Saugrohrs mit Hilfe des Trennkörpers verlängern bzw. fortführen lassen.

Eine Ausführungsform sieht vor, dass der Trennkörper im Wesentlichen in der Art einer Trennscheibe ausgebildet ist, wobei die Trennscheibe bevorzugt im Bereich der Drosselklappe angeordnet ist. Diese Ausführungsform erweist sich als besonders vorteilhaft, wenn vorgesehen ist, das Trennelement im Saugrohr so auszubilden, dass sich das Trennelement im Wesentlichen bis zur Drosselklappe bzw. zum Trennkörper erstreckt.

Eine nicht erfindungsgemäße Ausführungsform sieht vor, dass der Trennkörper als kreisförmige Scheibe ausgebildet sein kann, wobei der Durchmesser des Trennkörpers im Wesentlichen dem Durchmesser der Drosselklappe entspricht. Dabei kann vorgesehen sein, dass die stirnseitige Kontur des Trennelements im Saugrohr der stirnseitigen Kontur des Trennkörpers, oder umgekehrt, entspricht. Wird der Trennkörper also als kreisrunde Scheibe ausgebildet, so weist das Trennelement im Saugrohr eine bevorzugt formkomplementäre Ausführungsform zum Trennkörper in der Drosselklappenanordnung auf.

Eine ebenfalls nicht erfindungsgemäße Ausführungsform sieht vor, dass der Trennkörper drehfest mit der Drosselklappe und/oder der Welle verbunden ist. Die Drosselklappe und der Trennkörper können dabei auf einer gemeinsamen schwenkbar gelagerten Welle angeordnet sein, wobei der Trennkörper um einen relativen Wert, bevorzugt jedoch um 90° versetzt zur Drosselklappe auf der Welle angeordnet ist. Der Trennköper und die Drosselklappe bilden hierbei also einen im Wesentlichen einstückigen Formkörper.

Die erfindungsgemäße Ausführungsform sieht vor, dass die Drosselklappe der Drosselklappenanordnung zweigeteilt ausgebildet ist, dergestalt, dass in einem Teilungsbereich der Drosselklappe der Trennkörper und/oder das Trennelement angeordnet ist. Der Teilungsbereich ist dabei so auszubilden, dass eine form- und funktionskomplementäre Verbindung zum Trennkörper oder zum Trennelement im Saugrohr erreicht werden kann.

Es ist also denkbar, die Drosselklappe und den Trennkörper einstückig auszubilden bzw. herzustellen, um somit die Herstellungskosten der Drosselklappenanordnung zu senken bzw. eine aus möglichst wenig Einzelteilen und damit montagefreundlichere Ausgestaltung der Drosselklappenanordnung bzw. Sauganlage zu erzielen.

Eine weitere bevorzugte Ausführungsform sieht vor, dass der Trennkörper von dem im Saugrohr integrierten Trennelement gebildet wird, dergestalt, dass das Trennelement so ausgebildet ist, dass sich das Trennelement des Saugrohrs im Wesentlichen bündig abschließend bis zur schwenkbar gelagerten Welle der Drosselklappe in die Drosselklappenanordnung hinein erstreckt. Die Drosselklappe ist dabei zweigeteilt ausgebildet und weist einen Teilungsbereich auf, in dem das Trennelement zumindest bereichsweise angeordnet ist. Mit anderen Worten bildet das Trennelement im Saugrohr den Trennkörper, wodurch auf einen separaten Trennkörper verzichtet werden kann. Das Trennelement im Saugrohr kann sich dabei bis zur Drosselklappenanordnung oder darüber hinaus erstrecken bzw. kann vorgesehen sein, in Strömungsrichtung verlaufend sowohl vor (stromauf) als auch nach (stromab) der Drosselklappenanordnung ein bis zur Drosselklappe reichendes Trennelement vorzusehen. Auch hierbei ist das Trennelement form- und funktionskomplementär zur Drosselklappe ausgebildet, wodurch sich auch bei dieser Ausführungsform ein im Wesentlichen bündiger und fluchtender Kontaktbereich zur Drosselklappe bzw. zur Welle der Drosselklappe bildet.

Im Folgenden wird die Erfindung anhand lediglich Ausführungsbeispiele darstellender Zeichnungen näher erläutert.

Es zeigen:
- Fig. 1: eine schematisch dargestellte Sauganlage mit einer am Saugrohr angeschlossenen Drosselklappenanordnung;
- Fig. 2: in schematischer Darstellung die nicht erfindungsgemäße Drosselklappenanordnung gemäß Fig. 1;
- Fig. 3: in schematischer Darstellung eine erfindungsgemäße Drosselklappenanordnung;
- Fig. 4: die nicht erfindungsgemäße Drosselklappe gemäß Fig. 1 und Fig. 2 in einer Einzelansicht;
- Fig. 5: die erfindungsgemäße Drosselklappe gemäß Fig. 3 in einer Einzelansicht.

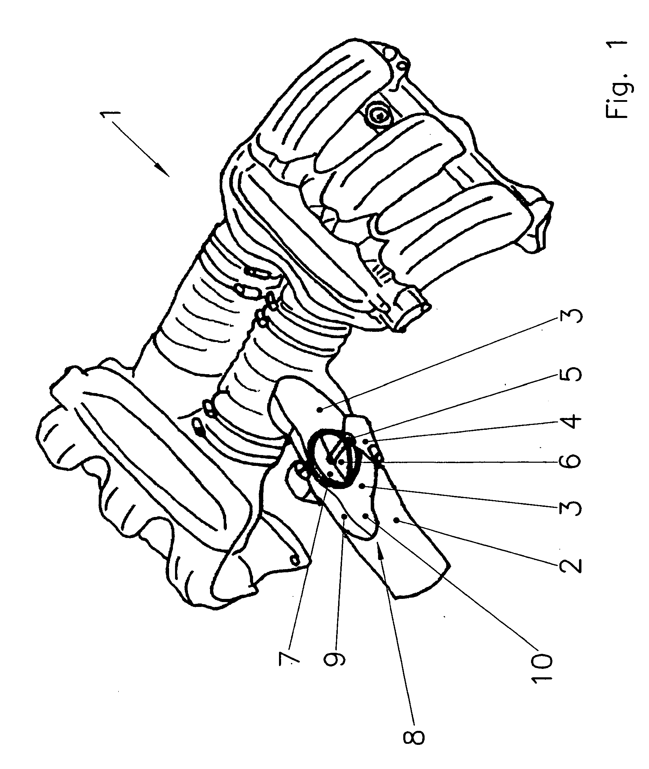

Fig. 1 zeigt die schematische Darstellung einer Sauganlage 1 für eine Brennkraftmaschine mit mindestens zwei Zylinderbankreihen. Die Sauganlage 1 weist ein mit einem Trennelement 3 versehenes Saugrohr 2 auf, wobei das Saugrohr 2 mittels des Trennelements 3 zweiflutig ausgebildet ist. Das Trennelement 3 dient zur Bildung zweier Teilkanäle 9, 10, um die Trennung der Resonanzvolumina der das Saugrohr 2 durchströmenden Verbrennungsluft zu gewährleisten bzw. eine bessere Füllung der Zylinder mit Verbrennungsluft zu gewährleisten.

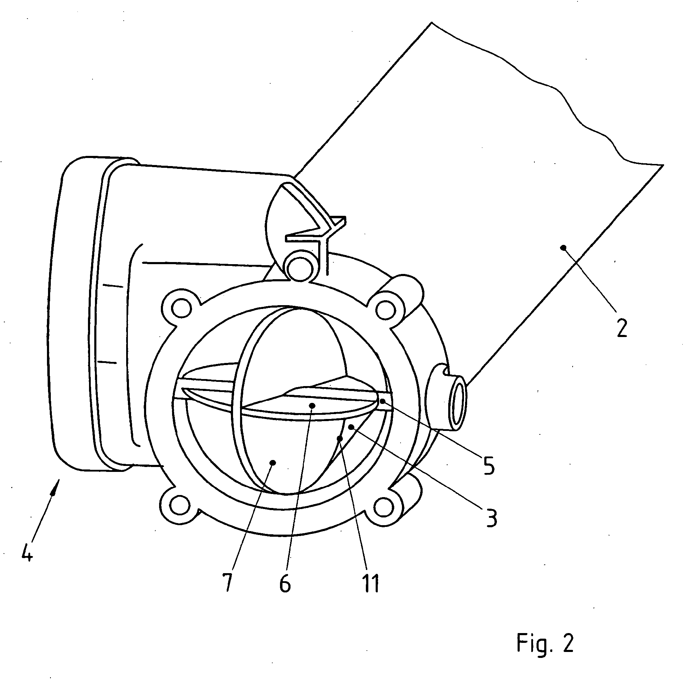

Am Saugrohr 2 ist eine Drosselklappenanordnung 4 angeschlossen, wobei die Drosselklappenanordnung 4 eine über eine Welle 5 schwenkbar gelagerte Drosselklappe 6 und einen mit der Drosselklappe 6 drehfest verbundenen Trennkörper 7 aufweist. Das Trennelement 3 erstreckt sich bis zum Trennkörper 7 und wird darüber hinaus fortgesetzt. Das Saugrohr 2 kann somit im Wesentlichen nahezu vollständig durch das Trennelement 3 und den in der Drosselklappenanordnung 4 angeordneten Trennkörper 7 getrennt werden und bildet somit nahezu über seine gesamte Länge die voneinander getrennt ausgebildeten Teilkanäle 9 und 10. Der Trennkörper 7 ist drehfest mit der Drosselklappe 6 bzw. der Welle 5 verbunden, so dass sich eine feste Anordnung des Trennkörpers 7 auf der Welle 5 ergibt und somit auch bei Betätigung bzw. Drehung der Drosselklappe 6 die räumliche Trennung der beiden Teilkanäle 9 und 10 fortgesetzt werden kann. Der Trennbereich 8 des Saugrohrs 2 erstreckt sich also nahezu vollständig durch das Saugrohr 2 und die Drosselklappenanordnung 4 bzw. darüber hinaus. Eine genauere Darstellung der Drosselklappenanordnung 4 bzw. der Drosselklappe 6 zeigt Fig. 2.

Fig. 2 zeigt die Drosselklappenanordnung 4 gemäß Fig. 1. Die Drosselklappenanordnung 4 weist eine über eine Welle 5 schwenkbar gelagerte Drosselklappe 6 auf. Die Drosselklappe 6 ist drehfest mit der Welle 5 verbunden. Ebenfalls auf der Welle 5 der Drosselklappe 6 ist der Trennkörper 7 angeordnet, wobei der Trennkörper 7 hier in der Art einer Trennscheibe ausgebildet ist. Der Trennkörper 7 ist ebenfalls drehfest mit der Welle 5 der Drosselklappe 6 verbunden und weist im Wesentlichen den gleichen Durchmesser auf wie die Drosselklappe 6. Der Trennkörper 7 und die Drosselklappe 6 sind hierbei im Wesentlichen einstückig hergestellt, wobei der Trennkörper 7 um 90° versetzt zur Drosselklappe 6 auf der Welle 5 angeordnet ist. Die Drosselklappe 6 und der Trennkörper 7 bilden also ein im Wesentlichen einstückiges Bauteil. Es ist natürlich auch denkbar, die Drosselklappe 6 und den Trennkörper 7 entgegengesetzt auszubilden bzw. die Welle um 90° versetzt in der Drosselklappenanordnung 4 anzuordnen.

Die Drosselklappe 6 befindet sich in dieser Darstellung, entgegen der Darstellung in Fig. 1, in einer vollständig geöffneten Position und erlaubt der durchströmenden Luft in dieser Position den größtmöglichen Durchfluss. Über die Welle 5 kann die Drosselklappe 6 jedoch so verschwenkt werden, dass die Durchflussmenge der Luft beeinflusst und im Folgenden vermindert werden kann. Im weiteren Verlauf der Drosselklappenanordnung 4 ist ein Teilstück des schematisch dargestellten Saugrohrs 2 abgebildet, wobei sich das Saugrohr 2 zumindest bis an die Drosselklappenanordnung 2 erstreckt und stirnseitig an diesem angeschlossen werden kann. Das Saugrohr 2 ist zweiflutig ausgebildet, wozu im Saugrohr 2 das Trennelement 3 angeordnet ist, mit dem zwei im Wesentlichen querschnittsgleiche Teilkanäle gebildet werden. Das Trennelement 3 weist an seiner dem Trennkörper 5 zuweisenden Stirnseite 11 einen kreisförmigen Innenradius auf, dessen Durchmesser im Wesentlichen dem Durchmesser des Trennkörpers 7 entspricht. Der Trennkörper 7 und die Stirnseite 11 des Trennelements 3 sind folglich formkomplementär ausgebildet. Bevorzugt weisen der Trennkörper 7 und das Trennelement 3 die gleiche Materialstärke auf bzw. sind so ausgebildet, dass sich ein im Wesentlichen fluchtender Übergang vom Trennkörper 7 zum Trennelement 3 ergibt.

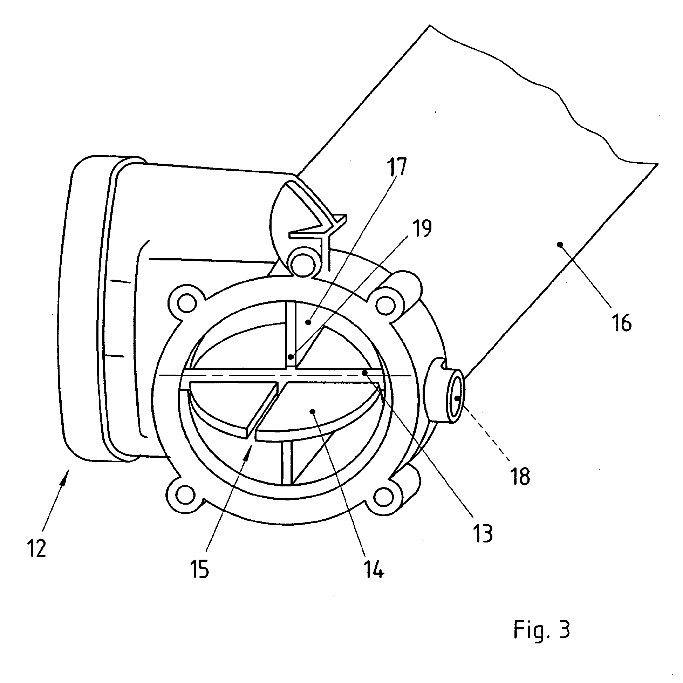

Fig. 3 zeigt in schematischer Darstellung eine erfindungsgemäße Drosselklappenanordnung 12. Die Drosselklappenanordnung 12 weist ebenfalls eine auf einer Welle 13 schwenkbar gelagerte Drosselklappe 14 auf. Die Drosselklappe 14 ist hierbei zweigeteilt ausgebildet, wobei zwischen jeweils zwei halbkreisförmigen Teilstücken der Drosselklappe 14 ein Teilungsbereich 15 entsteht, und wobei sich der Teilungsbereich 15 vom äußeren Umfang der Drosselklappe 14 bis zur Welle 13 im Wesentlichen 90° versetzt zu dieser verlaufend erstreckt. Im weiteren Verlauf der Drosselklappenanordnung 12 ist ein schematisch dargestellter Teilbereich eines Saugrohres 16 dargestellt, wobei das Saugrohr 16 durch ein Trennelement 17 im Wesentlichen zweiflutig, zwei Teilkanäle bildend, ausgebildet ist. Das Trennelement 17 ist so ausgebildet, dass es form- und funktionskomplementär zum Teilungsbereich 15 der Drosselklappe 14 ausgebildet ist und erstreckt sich im Wesentlichen bis zur axialen Wellenmitte 18 der Welle 13 der Drosselklappe 14. Um die Positionierung des Trennelements 17 bis hin zur axialen Wellenmitte 18 der Welle 13 zu gewährleisten, ist im Trennelement 17 im Bereich der Welle 13 eine Ausnehmung 19 vorgesehen, wobei die Ausnehmung 19 in ihrem Durchmesser im Wesentlichen dem Durchmesser der Welle 13 entspricht. Bei der in Fig. 3 dargestellten Drosselklappenanordnung 12 wird der Trennkörper also im Wesentlichen von dem im Saugrohr 16 angeordneten Trennelement 17 gebildet, bzw. stellt ein Teilbereich des Trennelements 17 gleichzeitig den Trennkörper dar. Durch Drehen der Welle 13 bzw. durch Betätigen der Drosselklappe 14 kann der Durchströmungsquerschnitt der durchströmenden Luftmenge im Bereich der Drosselklappenanordnung 12 reguliert werden.

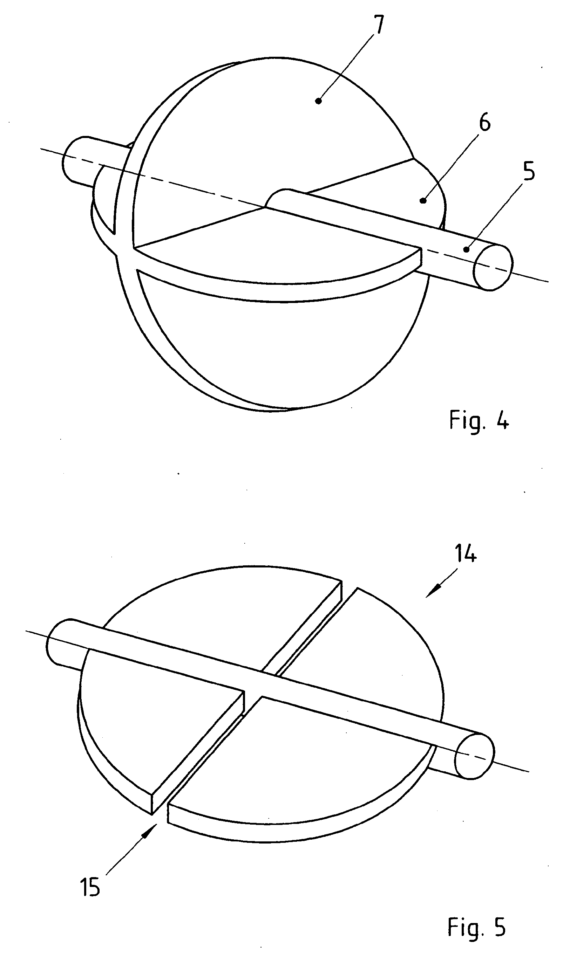

Fig. 4 zeigt die nicht erfindungsgemäße Drosselklappe 6 gemäß Fig. 1 in einer vergrößerten Einzeldarstellung. Die Drosselklappe 6 und der Trennkörper 7 bilden ein im Wesentlichen einstückiges Bauteil, wobei sowohl die Drosselklappe 6 als auch der Trennkörper 7 drehfest mit der Welle 5 der Drosselklappe 6 verbunden sind. Es ist natürlich auch denkbar, die Drosselklappe 6 bzw. den Trennkörper 7 als separat gefertigte Bauteile auszubilden, die erst nach erfolgter Fertigung miteinander verbunden werden. Der Durchmesser des Trennkörpers 7 entspricht im Wesentlichen dem Durchmesser der Drosselklappe 6. Eine einstückige Ausgestaltung hat indes den Vorteil, dass der Trennkörper 7 in einer unveränderbaren Position auf der Welle 5 der Drosselklappe 6 fixiert werden kann.

Fig. 5 zeigt die erfindungsgemäße zweigeteilte Drosselklappe 14 gemäß Fig. 3. Die beiden Teilhälften der Drosselklappe 14 bilden den Teilungsbereich 15, wobei der Teilungsbereich 15 im Wesentlichen so ausgebildet ist, dass er der Materialstärke des im Teilungsbereich 15 anzuordnenden Trennelements bzw. Trennkörpers entspricht. Der Teilungsbereich 15 verläuft im Wesentlichen 90° versetzt zur Welle 13 der Drosselklappe 14 und erstreckt sich vom äußeren Umfang der Drosselklappe 14 bis zur Welle 13.

Die hier dargestellten Ausführungsformen stellen lediglich eine Auswahl möglicher Lösungen dar und erheben nicht den Anspruch der Vollständigkeit. Es sind natürlich weitere Ausführungsformen möglicher Drosselklappenanordnungen denkbar, soweit diese unter den Anspruchwortlaut fallen.

### Bezugszeichenliste

- 1: Sauganlage
- 2: Saugrohr
- 3: Trennelement
- 4: Drosselklappenanordnung
- 5: Welle
- 6: Drosselklappe
- 7: Trennkörper
- 8: Trennbereich
- 9: Teilkanal
- 10: Teilkanal
- 11: Stirnseite
- 12: Drosselklappenanordnung
- 13: Welle
- 14: Drosselklappe
- 15: Teilungsbereich
- 16: Saugrohr
- 17: Trennelement
- 18: Wellenmitte
- 19: Ausnehmung

## Patentansprüche

1. Sauganlage (1) für eine Brennkraftmaschine mit mindestens zwei Zylinderbankreihen, wobei die Sauganlage (1) zumindest ein zweiflutiges Saugrohr (2) umfasst, dergestalt, dass im Saugrohr (2) ein Trennelement (17) integriert ist, das den Innenraum des Saugrohrs in zwei- im Wesentlichen im Querschnitt gleich ausgebildete- Teilkanäle (9, 10) unterteilt, und wobei am Saugrohr (2) eine Drosselklappenanordnung (12) angeschlossen ist, wobei die Drosselklappenanordnung (12) zumindest eine über eine Welle (13) schwenkbar gelagerte Drosselklappe (14) zur Regulierung der das Saugrohr durchströmenden Luftmenge aufweist, wobei sich das Trennelement (17) in den Bereich der Drosselklappenanordnung (12) erstreckt, **dadurch gekennzeichnet, dass** die Drosselklappe (14) zweigeteilt ausgebildet ist, so dass das Trennelement ( 17) in einem in Form eines Spaltes ausgebildeten Teilungsbereich (15) der Drosselklappe (14) angeordnet ist, wobei sich der Spalt von der Welle (13) bis zum Umfang der Drosselklappe (14) erstreckt.

2. Sauganlage nach Anspruch 1, **dadurch gekennzeichnet, dass** das Trennelement (3, 17) form- und funktionskornplementär zu dem Teilungsbereich (15) der Drosselklappe (14) ausgebildet ist,

3. Sauganlage nach Anspruch 1 oder 2, **dadurch gekennzeichnet, dass** sich das Trennelement (17) bis zu einer axialen Wellenmitte (18) der Welle (13) der Drosselklappe (14) erstreckt,

4. Sauganlage nach einem der Ansprüche 1 bis 3, **dadurch gekennzeichnet, dass** das Trennelement (17) um einen relativen Wert, insbesondere jedoch um 90° versetzt zur Welle (13) angeordnet ist.

5. Sauganlage nach einem der Ansprüche 1 bis 4, **dadurch gekennzeichnet, dass** im Trennelement (17) im Bereich der Welle (13) eine Ausnehmung (19) vorgesehen ist, wobei die Ausnehmung (19) in ihrem Durchmesser im Wesentlichen dem Durchmesser der Welle (13) entspricht.

## Claims

1. Intake system (1) for an internal combustion engine having at least two cylinder bank rows, the intake system (1) comprising at least one two-channel intake pipe (2), in such a way that a separating element (17) is integrated in the intake pipe (2), which separating element (17) divides the interior of the intake pipe into two partial ducts (9, 10) of substantially identical cross section, and a throttle flap arrangement (12) being connected to the intake pipe (2), the throttle flap arrangement (12) having at least one throttle flap (14), which is mounted in a pivotable manner by means of a shaft (13), for regulating the air quantity flowing through the intake pipe, the separating element (17) extending into the region of the throttle flap arrangement (12), **characterized in that** the throttle flap (14) is formed in two parts, such that the separating element (17) is arranged in a parting region (15), which is formed in the manner of a gap, of the throttle flap (14), the gap extending from the shaft (13) to the periphery of the throttle flap (14).

2. Intake system according to Claim 1, **characterized in that** the separating element (3, 17) is designed in a complementary manner in terms of form and function to the parting region (15) of the throttle flap (14).

3. Intake system according to Claim 1 or 2, **characterized in that** the separating element (17) extends as far as an axial shaft centre (18) of the shaft (13) of the throttle flap (14).

4. Intake system according to one of Claims 1 to 3, **characterized in that** the separating element (17) is arranged offset with respect to the shaft (13) by a relative value, but in particular by 90°.

5. Intake system according to one of Claims 1 to 4, **characterized in that** a recess (19) is provided in the separating element (17) in the region of the shaft (13), the diameter of the recess (19) substantially corresponding to the diameter of the shaft (13).

## Revendications

1. Installation d'admission (1) pour un moteur à combustion interne comprenant au moins deux rangées de cylindres, l'installation d'admission (1) comprenant au moins un tuyau d'admission (2) à deux tubulures, de telle sorte qu'un élément de séparation (17) soit intégré dans le tuyau d'admission (2), lequel sépare l'espace interne du tuyau d'admission en deux conduits partiels (9, 10) de sections transversales essentiellement identiques, et un agencement à papillon d'étranglement (12) étant raccordé au tuyau d'admission (2), l'agencement à papillon d'étranglement (12) présentant au moins un papillon d'étranglement (14) monté pivotant par le biais d'un arbre (13) pour la régulation de la quantité d'air traversant le tuyau d'admission, l'élément de séparation (17) s'étendant dans la région de l'agencement à papillon d'étranglement (12), **caractérisée en ce que** le papillon d'étranglement (14) est réalisé en deux parties, de sorte que l'élément de séparation (17) soit disposé dans une région de division (15) du papillon d'étranglement (14) qui est réalisée en forme de fente, la fente s'étendant depuis l'arbre (13) jusqu'à la périphérie du papillon d'étranglement (14).

2. Installation d'admission selon la revendication 1, **caractérisée en ce que** l'élément de séparation (17) est réalisé avec une forme et une fonction complémentaires de la région de division (15) du papillon d'étranglement (14).

3. Installation d'admission selon la revendication 1 ou 2, **caractérisée en ce que** l'élément de séparation (17) s'étend jusqu'à un milieu d'arbre axial (18) de l'arbre (13) du papillon d'étranglement (14).

4. Installation d'admission selon l'une quelconque des revendications 1 à 3, **caractérisée en ce que** l'élément de séparation (17) est disposé de manière décalée par rapport à l'arbre (13) d'une valeur relative, notamment toutefois de 90°.

5. Installation d'admission selon l'une quelconque des revendications 1 à 4, **caractérisée en ce qu'**un évidement (19), est prévu dans l'élément de séparation (17) dans la région de l'arbre (13), l'évidement (19) ayant un diamètre correspondant essentiellement au diamètre de l'arbre (13).
